(19) **Europäisches Patentamt / European Patent Office / Office européen des brevets**

(11) **EP 3 391 291 B1**

(12) **FASCICULE DE BREVET EUROPEEN**

(45) Date de publication et mention de la délivrance du brevet:
**02.09.2020 Bulletin 2020/36**

(21) Numéro de dépôt: **16809073.6**

(22) Date de dépôt: **12.12.2016**

(51) Int Cl.:
*G06K 19/07* *(2006.01)*     *G06K 19/077* *(2006.01)*

(86) Numéro de dépôt international:
**PCT/EP2016/080698**

(87) Numéro de publication internationale:
**WO 2017/102667 (22.06.2017 Gazette 2017/25)**

(54) **DISPOSITIF RADIOFREQUENCE A CIRCUIT LC AJUSTABLE COMPRENANT UN MODULE ELECTRIQUE ET/OU ELECTRONIQUE**

FUNKFREQUENZVORRICHTUNG MIT ANPASSBAREM LC-SCHALTKREIS, DER EIN ELEKTRISCHES UND/ODER ELEKTRONISCHES MODUL UMFASST

RADIOFREQUENCY DEVICE WITH ADJUSTABLE LC CIRCUIT INCLUDING AN ELECTRIC AND/OR ELECTRONIC MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2015 EP 15306997**

(43) Date de publication de la demande:
**24.10.2018 Bulletin 2018/43**

(73) Titulaire: **Thales Dis France SA**
**92190 Meudon (FR)**

(72) Inventeurs:
• **SEBAN, Frédérick**
**13881 Gemenos Cedex (FR)**
• **BUYUKKALENDER, Arek**
**13881 Gemenos Cedex (FR)**
• **PENAUD, Claude-Eric**
**13881 Gemenos Cedex (FR)**
• **MERIDIANO, Jean-Luc**
**13881 Gemenos Cedex (FR)**
• **BOUSQUET, Christophe**
**13881 Gemenos Cedex (FR)**

(74) Mandataire: **Milharo, Emilien**
**Thales Dis France SA**
**Intellectual Property Department**
**525, avenue du Pic de Bertagne**
**CS12023**
**13881 Gémenos Cedex (FR)**

(56) Documents cités:
**EP-A1- 0 992 366          WO-A1-2005/104022**
**US-A1- 2015 097 040**

## Description

Domaine de l'invention.

L'invention concerne un dispositif de communication radiofréquence comprenant un circuit électrique à puce radiofréquence, ledit dispositif ayant une capacité et/ou une inductance ajustable(s) pour ajuster un accord en fréquence du circuit électrique à puce radiofréquence.

En particulier, le dispositif comprend un module de circuit intégré avec capacité et/ou inductance, ledit module étant configuré pour être connecté ou couplé à une antenne radiofréquence ou antenne relais disposée à l'extérieur du module, notamment dans un corps de dispositif qui peut être un corps de carte, tout autre dispositif électrique ou électronique.

L'invention peut concerner notamment le domaine des supports électroniques tels que cartes à puce à contacts et/ou sans-contact ou cartes hybrides, tickets ou étiquettes radiofréquences (RFID), transpondeurs radiofréquences, inserts (ou inlay) intégrant ou constituant un tel module.

L'invention vise également les pages de couverture ou pages de mentions variables électroniques (Data pages) de passeport.

De tels dispositifs (ou supports électroniques) radiofréquences peuvent être conformes notamment au standard ISO / IEC 14443 ou ISO 78016 ou ICAO ou ISO / IEC 15693.

Dans une application préférée, le module électronique de l'invention porte une antenne et se trouve associé à une antenne passive ou relais amplificatrice pour une augmentation de la portée de la communication radiofréquence. L'antenne passive et/ou le module peuvent être placés de préférence dans un corps de carte à puce ou tout autre dispositif, par exemple un téléphone, sous forme amovible ou soudée.

Art antérieur.

Le brevet EP1242970 (B1) décrit des dispositifs radiofréquences comprenant un circuit électrique à puce radiofréquence. Le circuit comprend des plaques de condensateur formant capacité et une antenne formant inductance. Au moins la capacité et/ou inductance sont ajustables, par ajout et/ou suppression de matière conductrice notamment par laser, pour ajuster un accord en fréquence du circuit électrique. Ce brevet vise des étiquettes électroniques (tags) de petites dimensions ou des cartes sans-contact ou mixtes (contacts et sans-contact).

La demande de brevet EP 0 992 366 A1 décrit un dispositif composé de deux puces électroniques assemblées face à face et connectées par une couche d'adhésif conducteur anisotropique. Les puces comprennent des capacités et une antenne ajustables par laser.

Le document US 2015/097040 A1 décrit une structure d'antenne booster sur un corps de carte à puce.

L'antenne comprend une zone de couplage d'un module radiofréquence.

Le document WO 2005/104022 A1 décrit des tags avec des fréquences de résonance variables. Les tags RFID comprennent un circuit interrupteur pour changer dynamiquement des connexions à des éléments passifs parmi des capacités, une inductance.

D'autre part, le brevet FR 2743649 décrit un module de carte à puce à antenne et/ou plages de contact pouvant être incorporé dans un corps de carte ou formant une étiquette électronique RFID.

Par ailleurs, on connait également des dispositifs radiofréquences hybrides, tels que des cartes à contacts et sans-contact, comportant un module à contacts incorporé dans un corps de carte et connecté à une antenne logée dans le corps de carte.

On connait également les antennes amplificatrices (Booster antenna) ou circuits RLC qui prennent le flux électromagnétique d'un lecteur radiofréquence et le concentre vers une bobine sur un module de carte à puce qui est un autre circuit RLC de transpondeur radiofréquence. Chaque élément « antenne amplificatrice et module antenne possède sa propre fréquence de résonance respectivement $f_{0M} = \frac{1}{2\pi\sqrt{L_M C_C}}$ et $f_{0B} = \frac{1}{2\pi\sqrt{L_B C_B}}$, conçus de telle manière qu'une fois couplés ensemble, le système équivalent global obtenu est accordé pour être conforme à un système RFID fonctionnant à 13,56 Mhz voire 14 Mhz (Radiofrequency Identification Device en terminologie anglo-saxonne.

Pour parvenir à l'ajustement, les transpondeurs développés avec une technologie utilisant une antenne sur le module sont limités par le fait que chaque type de puce possède sa propre capacité interne (Cc) qui affecte la fréquence de résonance fOM de l'antenne sur le module. Comme les films support de module ne sont pas facilement flexibles pour des modifications, l'état actuel de l'art prévoit d'adapter la fréquence de résonance du booster (antenne relais) FOB à celle du module lorsqu'il y a changement de puce. L'adaptation peut consister à concevoir une nouvelle antenne relais dans le corps de carte accueillant le module.

Problème technique.

A l'heure actuelle, pour adapter la fabrication de dispositif radiofréquence à une nouvelle valeur capacitive de puce radiofréquence, la pratique courante de l'état de la technique consiste à concevoir de nouveau le film support du module, pour modifier le nombre de spires de l'antenne du module. Alternativement ou en outre, la pratique prévoit d'ajuster la fréquence de résonance de l'antenne dans le corps de carte qu'elle soit ou non de type relais (booster antenne). Dans ce dernier cas (non relais), l'antenne dans le corps est reliée électriquement directement à la puce.

La méthode courante ci-dessus ne permet pas d'avoir des moyens d'ajustage flexible (ou pratique) de la capacité et/ou de l'inductance du module.

L'ajustement ci-dessus actuellement utilisé est contraignant car il ne permet pas une flexibilité ou souplesse de la fabrication du produit ou dispositif.

Il est nécessaire de redéfinir et graver un nouveau module ou nouvelle antenne dans le corps de carte à puce à chaque changement de type de puce radiofréquence présentant une variation de capacité interne significative.

Résumé de l'invention

Le principe de l'invention consiste à concevoir une configuration de film-support (ou couche support isolante) de module métallisé (ou conducteur) de module qui permettre un ajustement de capacité et/ou d'inductance pour compenser des variations de capacité interne des puces (Cc) lors de leur changement ou approvisionnement de fournisseurs différents. L'ajustement permet de conserver une fréquence de résonance F0M aussi constante que possible ou du moins minimiser la variation qui en résulterait.

La fréquence de résonance est considérée constante quand elle varie plus ou moins de quelques Mhz. De préférence, pour une application donnée, l'invention prévoit une faible tolérance de variation de la fréquence de résonance notamment 2 Mhz voire 0,5 Mhz. Dans les applications préférées, la fréquence de résonance à respecter peut être elle-même comprise entre environ 13 MHz et 27 MHz selon les applications.

Dans le cas de dispositif radiofréquence avec module coopérant avec un élément électrique disposé en dehors du module (par exemple dans un corps de carte, un boîtier, un circuit imprimé (PCB) de dispositif électronique), il est plus aisé d'effectuer l'ajustement (notamment pour un accord en fréquence), au niveau du module que de l'effectuer en dehors du module, notamment sur un élément électrique dans un corps de carte ou autre support coopérant avec le module.

Ainsi, c'est la première fois que l'on propose un dispositif radiofréquence comportant un module à puce électronique (conforme notamment au standard ISO 7816) et qui soit ajustable en agissant uniquement au niveau de la capacité et/ou antenne du module. L'invention permet d'agir, pour ajuster un accord de fréquence, sur un module standard ajustable et de conserver un corps de carte support standard sans modification de circuit électrique (antenne et/ou capacité) à son niveau.

Les modules étant produits en bobine et en ruban continu (35 mm de large), il est aisé et pratique d'agir à leur niveau. Surtout, il est pratique d'effectuer un ajustement en fréquence à des postes de fabrication déjà existants sur les chaînes de fabrication courantes. Ainsi, on préfère prévoir en approvisionnement, un module prédéfini unique présentant par défaut :

- une réserve d'inductance disponible la plus grande quitte à la réduire ensuite selon le besoin d'ajustement en une opération simple additive de connexion électrique,

- et/ou une réserve de capacité disponible la plus grande possible que l'on accroit à partir d'un minimum, simplement par une ou plusieurs connexion électriques ensuite, selon le besoin d'ajustement en une opération simple additive de connexion électrique. (Toutefois, dans une variante décrite, moins pratique l'ajustement peut être soustractif)

De manière surprenante, les inventeurs ont constaté, malgré les petites dimensions d'un film-support du module de carte à puce (ISO 7816), le peu de métallisations disponibles et la présence de zones de contact électrique non altérables, qu'il est possible de proposer une configuration générique de module permettant suffisamment de variations de capacité et/ou d'inductance pour maintenir un accord de fréquence constant du système transpondeur radiofréquence global.

L'invention permet d'éviter une modification complète du circuit radiofréquence dont la capacité interne (Cc) peut varier de plus de 3 $\mu$F, 5 $\mu$F voire 7 $\mu$F ou même 10 $\mu$F ou 17 $\mu$F d'un type de puce à un autre.

Les modules mixtes ou à contacts standard ISO 7816 ont généralement des dimensions inférieures à environ 15 x 25 mm (ou surface équivalente), par exemple 8,32 x 11 mm ; 10,8 x 13 mm ; 11,8 x 13 mm, etc.

En outre, le standard ISO 7816 prévoit sur les plages de contact, huit ou six zones de contact électrique, non altérables (interdites à toute modification) pour connecter un lecteur externe.

De préférence, l'invention prévoit des moyens d'ajustement permettant un ajustement significatif supérieur à 10 micros Farad (par exemple 17$\mu$F) pour s'accommoder de puces présentant des écarts de capacités intrinsèques supérieurs à 10 $\mu$F (micro Farad).

Une des idées de l'invention consiste à utiliser la partie centrale du module pour créer une série de capacités qui peut être activée ou désactivée par simple connexion électrique, notamment par fil soudé, (ou rupture de connexion électrique) effectuée de préférence au cours de l'opération classique de câblage de la puce.

Par ailleurs, une idée alternative ou complémentaire pour avoir un circuit RLC ajustable est de permettre une configuration d'inductance de spirale ou bobine d'antenne variable sur le module. Cela peut se faire par une connexion de la puce à l'antenne à différents endroits de la spirale.

De manière générale, avantageusement, l'invention prévoit une configuration de module unique permettant de varier aisément l'un quelconque des trois paramètres RLC intrinsèques du module ou de combiner deux ou trois de ces paramètres.

L'invention prévoit également d'avoir un corps-support (notamment corps de carte) standardisés en fabrication (à configuration unique), avec des éléments électriques qui soient par exemple, une antenne relais ou une antenne de transpondeur radiofréquence reliée (ou couplée) directement au module, l'ajustement s'effectuant sur le module.

L'invention a donc pour objet un dispositif de communication à puce radiofréquence conforme à la revendication 1

Généralement, le module peut présenter visiblement au moins une (ou plusieurs) marque, élément ou moyen d'ajustement de ladite capacité et/ou la première antenne.

Selon d'autres caractéristiques :

- Le module présente une face principale ayant une surface inférieure ou égale à 375 mm2 (25 x 15 mm) ;
- L'ajustement équivaut ou compense une variation de capacité interne de la puce supérieur à 5 $\mu$F ;
- Selon une variante, le dispositif comprend un corps-support incorporant ou coopérant avec ledit module et le corps-support porte un élément électrique du circuit électrique et/ou électronique, ledit élément étant configuré pour connecter ou coopérer avec le module ;
- L'élément électrique est choisi parmi une puce radiofréquence, une seconde antenne, une antenne relais, une seconde capacité configurée pour connecter ou coopérer avec ledit circuit électrique ;
- Le module comprend au moins deux secondes plaques conductrices sur une seconde face disposées en regard d'au moins une première plaque de manière à former ledit condensateur ajustable, lesdites plaques étant reliées électriquement par au moins une connexion électrique ;
- La connexion électrique entre lesdites deux secondes plaques est un fil soudé ou une impression conductrice ou un dépôt conducteur électrique ;
- La connexion électrique peut être pré-câblée par métallisation de la couche isolante et présente une marque de coupure de décourt-circuitage .
- L'antenne est formée sur le module, comporte plusieurs spires et comprend des extrémités ou bornes terminales de connexion débouchant sur la seconde face ;
- L'antenne est formée en dehors du module et en ce que le module comprend des plages d'interconnexion débouchant sur la seconde face, lesdites plages étant configurées pour connecter des extrémités ou bornes terminales de connexion de l'antenne ;
- Le dispositif forme une carte à puce ou un passeport et comportant une antenne passive couplée électromagnétiquement avec l'antenne du module.

L'invention a également pour objet un procédé de fabrication conforme à la revendication 13.

Brève description des figures.

- Les figures 1 illustre un système de communication radiofréquence entre un lecteur et un dispositif radiofréquence de l'invention sous forme de carte à carte à puce en vue éclatée, selon un mode de réalisation de l'invention ;
- La figure 2 illustre le schéma électrique correspondant du système de la figure 1 ;
- Les figures 3A et 3B illustrent respectivement recto, verso, un premier mode de réalisation d'un module de carte à puce conforme à un mode préféré de l'invention ;
- Les figures 4 et 5 illustrent un second mode de réalisation d'un module de carte à puce conforme à l'invention.

Description.

Dans les dessins, les mêmes références indiquent des éléments identiques ou similaires.

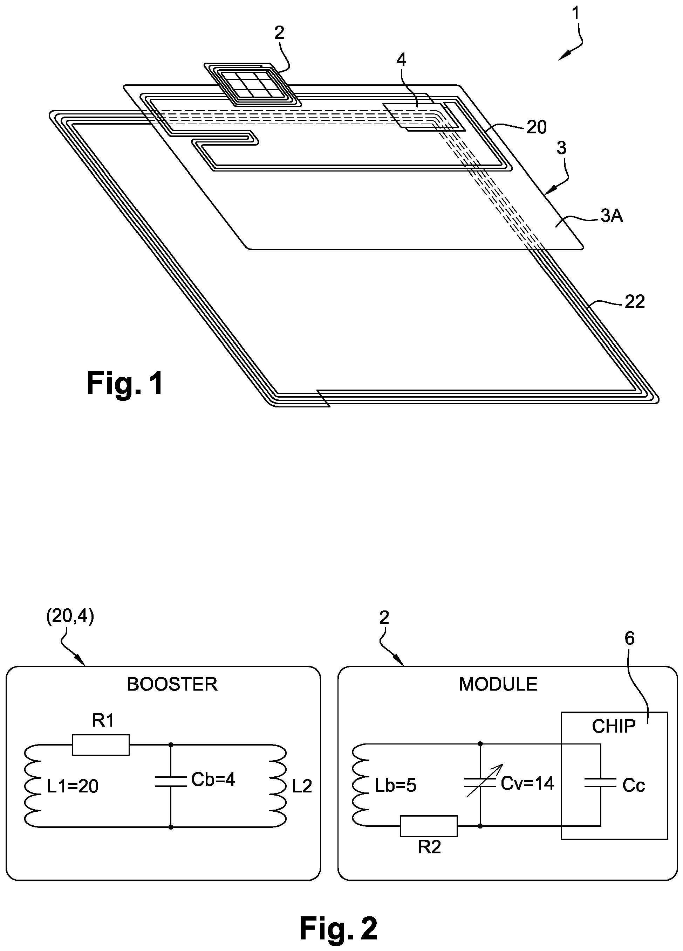

La figure 1 illustre un système de communication radiofréquence entre l'antenne 22 d'un lecteur et un dispositif radiofréquence 1 de l'invention sous forme de carte à puce radiofréquence (en vue éclatée), selon un mode de réalisation.

La carte 1 comprend une couche isolante support 12 portant une puce de circuit intégré 6 et une antenne 5, la couche isolante support appartient ici à un module électronique 2 encarté dans une cavité de corps 3 de carte. Le corps de carte 3 comprend une antenne amplificatrice 20 (ou antenne passive ou relais) sur une face 3A du corps 3, reliée à un condensateur 4. L'ensemble comprenant un transpondeur radiofréquence (puce, antenne, capacité) sur le module et l'antenne passive (20,4) du corps de carte 3, est accordé à une fréquence de résonance proche de 13,56 MHz.

Sur les figures suivantes, de manière générale, l'invention décrit un dispositif (pouvant être constitué du module seul ou non) comprenant un circuit électrique à puce radiofréquence 6. Le circuit du module comprend des plaques ou des pistes de condensateur 13A-13H formant capacité et une première antenne 5 formant inductance Lb ; La capacité (Cv ; 14) et/ou l'inductance 5 (Lb) sont ajustables respectivement, par ajustement de la surface déployée des plaques et/ou de celle de l'antenne, pour ajuster un accord en fréquence du circuit électrique 2. Pour ajuster, on utilise plus ou moins de surface déployée ou disponible jusqu'à un maximum.

L'ajustement laisse une marque d'ajustement, après réalisation de l'antenne et/ou des plaques de condensateur, selon le moyen d'ajustage mis en œuvre, comme expliqué ultérieurement (connexion partielle des plaques disponibles, abrasion de connexions entre plaque, perforation de la connexion entre deux plaques...) .

De même, pour l'inductance, on peut utiliser moins de spires d'antenne par rapport à la longueur d'antenne disponible et déployée sur le dispositif.

La surface déployée totale dans l'exemple pour le condensateur comprend la surface de la plaque externe 13A et la somme des plaques individuelles 13B à 13H. La surface utilisée peut correspondre à la surface de la plaque 13A et celle du nombre de plaques connectées entre elles et à la puce.

Selon une caractéristique, le dispositif comprend un module 2 incorporé dans un corps-support 3 ; Le module porte la capacité 14 et/ou première antenne ajustable(s) ; Le module comporte la couche isolante 3 (film-support diélectrique) espaçant lesdites plaques superposées et/ou portant ladite antenne.

De préférence, la couche isolante peut être choisie parmi divers substrats qui en fonction de leur caractéristique de permittivité (ou constante diélectrique) relative propre autorisent différentes épaisseurs de l'ensemble. Par exemple, pour le PVC dont le coefficient de permittivité $\mathcal{E}$ r = 5 l'épaisseur Maxi préférée est égale à environ 50 $\mu$m. A contrario pour du polypropylène dont le coefficient de permittivité $\mathcal{E}$ r = 2.2, l'épaisseur maxi préférée est d'environ 80$\mu$m, etc. ...)

Le corps-support peut être un corps 3 de carte à puce, une couverture de passeport, un boitier ou circuit imprimé PCB de téléphone portable, de montre, d'ordinateur portable, tout corps-support isolant. La surface 3A disponible du corps-support pour recevoir une antenne relais (ou normale) correspond, dans un mode de réalisation, à celle d'une face de carte au format ISO 7812 (format carte bancaire). Dans d'autres applications ou modes, le corps-support 3 présente une surface disponible 3A pour une antenne plane ou spirale plane deux fois plus importante que celle du module ou 3 ou 4 ou 5 fois voire 10 fois ou plus.

Selon d'autres caractéristiques, le corps-support 3 peut porter un élément électrique (6, 4, 11, 14) du circuit électrique ; L'élément électrique est configuré pour connecter ou coopérer avec ledit module électrique 2.

Ainsi, par exemple, l'élément peut être choisi parmi la puce de circuit intégré radiofréquence 6 qui peut être dans le module 2 ou déporté dans le corps-support 3 ; L'élément électrique peut comprendre une seconde antenne. Cette seconde antenne peut être une antenne relais 20 (ou amplificatrice ou passive) ou une première antenne de transpondeur radiofréquence 5 connectée directement à la puce ou une seconde antenne (non représentée) en complément à la première antenne 5 du module.

L'élément peut être une seconde capacité ou la première capacité (non représentée) configurée pour connecter ou coopérer avec ledit circuit électrique du module. La capacité dans le corps-support peut être les plaques de condensateur 14 portées par exemple, sur une feuille support du corps-support recevant le module ou sous forme d'un composant monté en surface (SMD).

A la figure 2, l'antenne relais (Booster) forme un premier circuit comprenant une résistance R1, au moins une inductance L1 (20) et une capacité Cb (4). Le module 2 quant à lui, forme un autre circuit (destiné à coopérer avec le premier circuit) comprenant une résistance R2 en série avec une inductance Lb(5), elle-même en parallèle avec une capacité variable Cv (14).

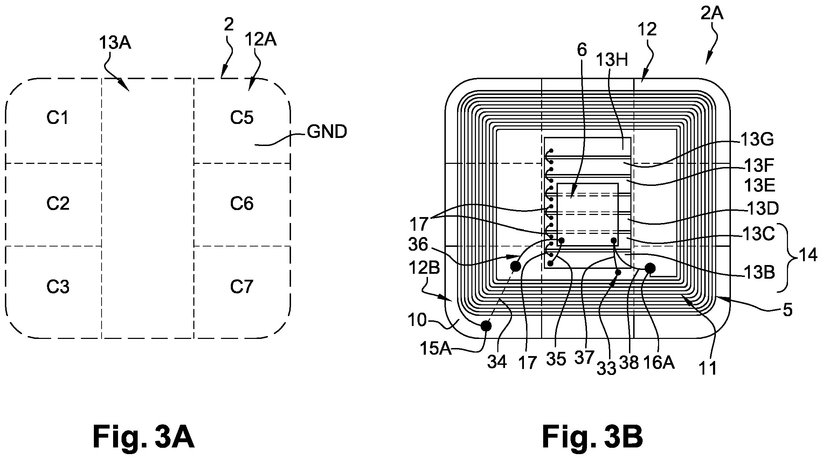

Sur les figures 3A, 3B, est illustré un mode détaillé de réalisation du module électrique et/ou électronique pouvant être compris ou utilisé dans le mode de réalisation de la figure 1. Le module 2 comprend une couche isolante 10 ou 12 support de métallisations ou de surfaces, plages conductrices, pistes électriquement conductrices. La couche peut être un substrat isolant diélectrique notamment en polyimide, en verre époxy. La couche comporte une première face 12A externe (destinée à être orientée vers l'extérieur du corps de carte) et seconde face 12B opposée interne (destinée à être orientée vers l'intérieur du corps de carte).

Le module comprend, dans l'exemple, au moins une première plaque conductrice 13A sur ladite première face 12A de la couche isolante débouchant sur la seconde face 12B ; La plaque est formée ici par une métallisation gravée du module de préférence une métallisation centrale, (normalement non utilisée pour connecter un lecteur à contact électrique) d'un module au format ISO 7816. Alternativement, cette plaque peut comprendre également le contact de masse GND.

La plaque 13A comprend une zone (ou borne) 33 d'interconnexion au circuit du module notamment à la puce. Cette zone 33 est accessible à l'aide d'un puits de connexion conducteur ou d'un via conducteur traversant la couche isolante.

Le module peut comprendre, de préférence sur le film support, une antenne 5 en forme de spirale plane comportant plusieurs spires 11 et des extrémités (ou bornes) terminales d'interconnexion 15A, 16A débouchant sur la seconde face 12B, pour connecter la puce RF (radiofréquence) 6. L'antenne 5 est de préférence disposée sur la face cachée interne 12B du module. Elle peut toutefois être disposée sur la face externe 12A notamment en périphérie de la métallisation externe ou des contact(s) électrique ISO 7816 éventuels. Le cas échéant, les extrémités d'interconnexion de l'antenne 5 sont accessibles par les connexions de la puce à l'aide de puits de connexion ou des vias conducteurs à travers la couche isolante support 12.

Alternativement, l'antenne 5 connectée à la puce 6 peut être en dehors du module notamment sur le corps de carte 3 à puce sur lequel est encarté le module. Ainsi, l'invention peut s'étendre notamment aux cartes hybrides (contact et sans-contact) utilisant une antenne unique noyée dans le corps de carte.

Ainsi, le circuit radiofréquence peut être accordé en fréquence pour plusieurs types de puces distinctes de divers fabricants et ayant des capacités internes variant notamment de plus de 10 $\mu$F ou 17 $\mu$F d'un type à l'autre, l'adaptation en fréquence pouvant s'effectuer au niveau du module.

Le module peut comporter des plages d'interconnexion (non représentées 15B, 16B) pour interconnecter une antenne disposée dans le corps-support incorporant le module.

Ces plages peuvent être similaires aux bornes d'extrémités de connexion (15A, 16A). Ces plages peuvent être configurées pour pouvoir connecter des bornes d'extrémités (ou terminales) de l'antenne ; Ces bornes peuvent être accessibles notamment au fond d'une cavité du corps-support (non illustrée).

Les plages d'interconnexion du module prévues pour interconnecter l'antenne du corps de carte, peuvent de préférence déboucher sur la seconde face (12B) du module. Les plages peuvent être disposées (de manière connue) notamment diamétralement opposées par rapport à la puce et être élargies pour faciliter une interconnexion avec les bornes terminales d'antenne disposées au fond de la cavité du corps support 3.

Le module comprend de préférence (comme illustré) une puce de circuit intégré radiofréquence 6 reliée à l'antenne 5 et à un condensateur pour former un transpondeur radiofréquence accordé en fréquence. Alternativement, la puce peut être disposée sur un circuit imprimé dans le corps support 3.

Selon une caractéristique de ce premier mode de réalisation, le module peut comprendre au moins une seconde plaque conductrice 13B sur ladite seconde face 12B disposée en regard de la première plaque 13A de manière à former ledit condensateur (Cv) = (14). Cette capacité à valeur unique peut être activée ou non selon les besoins d'ajustement.

Selon une autre caractéristique préférée de ce premier mode, le condensateur 14 du module est formé d'au moins deux secondes plaques conductrices 13B, 13C disposées sur la seconde face disposée en regard d'au moins la première plaque 13A ; Les plaques 13B, 13C sont reliées électriquement par au moins une connexion électrique 17. Cette connexion électrique constitue un élément d'ajustement de l'accord en fréquence de l'ensemble du transpondeur radiofréquence (puce, condensateur, antenne) par augmentation de la valeur de la capacité.

Dans l'exemple, le module présente une pluralité de plaques rectangulaires 13B-13H gravées et/ou collées sur la couche isolante 12 en regard de la plaque externe 13A et entre la spirale de l'antenne 5.

Les plaques 13B-13G, séparées à la base, peuvent toutes présenter la même surface ou être de surfaces différentes de manière à augmenter les possibilités de connexion entre elles ou à la puce ou limiter le nombre de liaisons 17 entre plaques. Par exemple, la plaque 13C peut être égale à 1, 5 fois la plaque 13B elle-même égale à 1, 2 fois la surface de la plaque 13D.

Ces plaques 13B-13G peuvent être toutes connectées en série par des liaisons 17 pour obtenir une valeur de capacité la plus grande.

Dans l'exemple, avec un film support diélectrique standard et en connectant toutes les plaques on peut obtenir une valeur de capacité égale à environ 14 - 17 µF (pico farad).

Ainsi grâce à l'invention, avec une même configuration de module, il est possible d'ajuster la valeur de capacité dans le circuit RLC du module. Il est ainsi possible de s'approvisionner et s'accommoder de puces radiofréquences de différents fournisseurs, ces puces électroniques présentant des valeurs de capacité interne sensiblement différentes. De telles puces RF exigent des ajustements en fréquence pouvant aller pour les plus courantes jusqu'à 14 µF de manière à conserver le même accord en fréquence de résonance.

Alternativement, la face externe 12A du module comporte plusieurs plaques au lieu d'une plaque unique de condensateur 13A. Chaque plaque débouche sur la seconde face 12B par un puits ou deux à travers la couche isolante. L'augmentation de la surface de la plaque externe opérationnelle dans le circuit radiofréquence peut s'effectuer par des connexions entres plaques à travers les puits. Ainsi, les connexions sont non apparentes de l'extérieur du module.

Selon une caractéristique, la connexion électrique 17 entre lesdites deux secondes plaques est réalisée par au moins un fil soudé. Cette connexion peut être avantageusement effectuée en temps masqué ou du moins au même poste de connexion que celui réalisant la connexion de la puce en fils soudé à l'antenne et/ou le cas échéant aux métallisations 13A sur la face externe 12A. Ces métallisations peuvent comprendre des plages de contacts C1-C7 pour connecter un lecteur à contacts électriques.

Alternativement, la connexion électrique 17 entre au moins deux secondes plaques 13A, 13B peut être par tout moyen connu notamment une impression conductrice (sérigraphie, jet de matière conductrice) ou un dépôt conducteur électrique (colle conductrice argent...). En particulier, le module peut être uniquement un module radiofréquence (sans plages de contact C1-C7 mais avec une plaque 13A).

La connexion électrique (17) peut être pré-câblée par métallisation de la couche isolante ; L'adaptation de capacité peut être obtenue en décourt-circuitant par la suite, au moins une des connexions électriques. La connexion peut être gravée au préalable et sectionnée notamment par laser.

Le sectionnement d'une connexion électrique 17 entre deux plaques par abrasion, mécanique, laser ou autre ou poinçonnage présente une marque de coupure de décourt-circuitage. La marque peut être une perforation au moins partielle de la connexion et ou de son support. L'élément d'ajustement de l'accord en fréquence est ici formé par cette perforation, ablation, abrasion sectionnant ou scindant des plaques entre elles pour diminuer la valeur de la capacité. La perforation peut être aisément mise en œuvre en production sur un ruban de module ou au cours d'une opération classique de décourt-circuitage par poinçonnement.

On procède de préférence à un enrobage de matière isolante de protection de la puce et des connexions 17, 35, 36, 37, 38.

Dans l'exemple, on effectue des connexions 17 de certaines plaques individuelles 13B-13G entre elles selon la valeur de la capacité à obtenir ou à ajuster ; On effectue également une connexion 35 d'un plot (LA) de la puce à l'une des plaque 13B notamment d'extrémité et une connexion 35 de la puce à la plaque 13A externe.

On effectue, le cas échéant, une connexion d'un plot LA de la puce à l'antenne 5 via sa borne d'interconnexion 15A externe à la spirale (ou antenne) (redirigé ici à l'intérieur de la spirale par un pont conducteur 34 sur isolant).

On effectue également une connexion (ici filaire) 38 du plot LB de La puce 6 pour connecter la borne 16A d'interconnexion de l'antenne disposée à l'intérieur de la spirale de l'antenne 5 avec une connexion 38 par fil soudé (wire bonding).

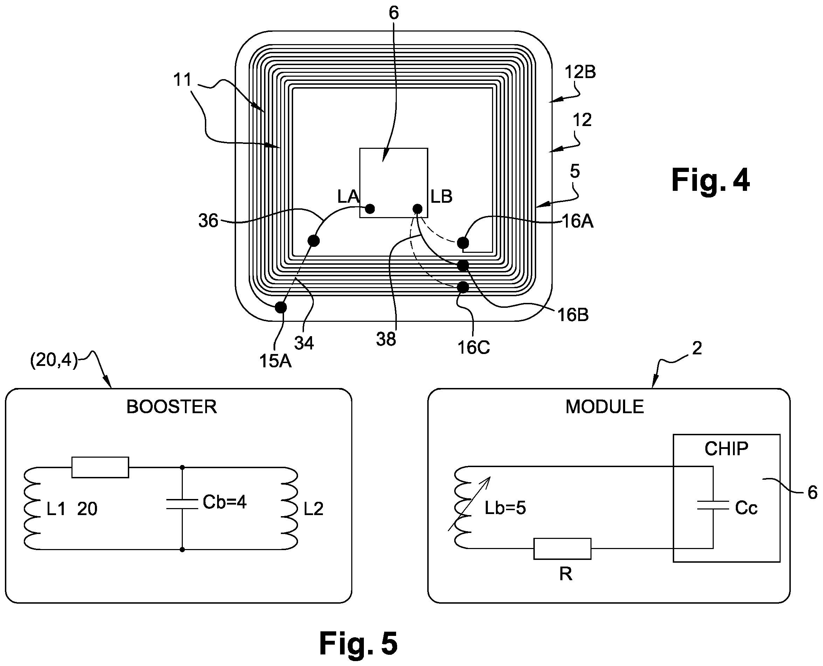

A la figure 4, selon un second mode de réalisation (permettant ou non d'équiper le dispositif de la figure 1), l'invention prévoit une antenne sur le module située de préférence en périphérie de son substrat 12 (couche support isolante). Ce mode de réalisation peut être indépendant du premier mode et constituer une invention à circuit RLC ajustable selon l'invention. L'ajustement s'effectue ici principalement au niveau de l'antenne par la valeur de l'inductance

Le module diffère de celui de la figure 3B en ce qu'il ne comprend pas de plaques de condensateur ni en interne, ni en externe. Par contre, la puce peut comporter une capacité intrinsèque. Alternativement, dans une autre variante de ce mode (non représenté), un condensateur peut être ajouté et connecté à l'antenne sous forme de puce de circuit intégré montée en surface (SMD) ou en appliquant le principe évoqué précédemment de capacité sous forme de métallisations (13A-13H) sur la couche support isolante 12.

Selon une caractéristique de ce second mode (figure 4), la puce 6 est connectée à un endroit intermédiaire 16B de l'antenne (ou spirale) ; Cet endroit intermédiaire est situé sur une spire 11, entre les bornes d'extrémité 15A, 16A de la spirale de l'antenne 5. Ainsi, lors de la connexion à la puce, l'invention peut prévoir de sauter au moins une portion de spire (ou une ou plusieurs spires. L'invention peut prévoir de supprimer des portions de spires par sectionnement notamment laser ou abrasion ou perforation bien que moins important ou moins nécessaire.

L'ajustement permet peut laisser également une marque correspondante telle une perforation, un sectionnement sur le parcours de l'antenne. Ainsi, tout ou partie de la surface de l'antenne déployée peut être utilisée. La surface ou longueur de l'antenne déployée dans l'exemple de la figure 4 correspond par exemple à la surface de la couche isolante 12 couverte par les spires utilisées.

La surface de l'antenne utilisée dépend de la position de l'endroit intermédiaire et correspond dans l'exemple à la surface de la portion d'antenne comprise entre les bornes (15A et 16C) ou (15A et 16B) ou (15A et 16A).

Avantageusement, l'invention prévoit de choisir précisément l'endroit voulu de connexion tout le long du parcours des spires pour bien ajuster de manière optimale l'accord de fréquence. L'élément d'ajustement de l'accord en fréquence est ici sous la forme de la connexion 38 à un point intermédiaire 16B situé sur le parcours de la spirale d'antenne entre les bornes terminales initiales 15A-16A de l'antenne. Un parcours plus court (que le parcours initial de l'antenne 15A-16A) défini par des points intermédiaires de connexion, diminue l'inductance initiale disponible de l'antenne.

La largeur des spires peut être prévue de manière à supporter une soudure par fil soudé (sans élargissement ponctuel de la largeur des spires). Alternativement plusieurs endroits (ou zones) prédéterminés peuvent être élargis sur le parcours de l'antenne ou des spires pour faciliter la soudure. Par exemple, au moins une spire (ou plusieurs) peut comporter au moins une zone de soudure ou de connexion élargie. Le nombre de zones élargies de connexion peut être 2 ou 3 ou 4 ou 5 sur au moins une spire. Les zones peuvent espacées régulièrement ou non. La zone peut être par exemple un carré ou un rond doublant la largeur de la spire à chaque endroit de connexion.

Dans l'exemple ci-dessus, la puce 6 peut être reliée à l'antenne 5 en trois positions alternatives 16A, 16B, 16C correspondant à des valeurs d'inductances différentes selon le besoin d'accord en fréquence.

En général, la borne de connexion 16A sera utilisée pour des puces ayant une petite capacité, la connexion 16B sera utilisée pour des puces ayant une capacité moyenne et la connexion 16C pour des puces ayant une haute capacité Cc interne.

L'intérêt de cette solution est que la borne d'interconnexion 16B peut être n'importe où sur la bobine 5 même sans avoir une spire ou boucle complète ; Le réglage de l'accord en fréquence peut être très précis pour conserver une fréquence de résonance F0M constante et pas simplement approximative.

La largeur des spires peut être compatible avec la surface requise pour une connexion en fil soudé.

Ainsi, grâce à ce mode de réalisation, l'antenne peut être prévue avec différents points ou bornes d'interconnexion intermédiaires 16B, 16C correspondant à des valeurs d'inductance L préétablies de l'antenne.

Ainsi, il est possible en fonction des caractéristiques de la puce électronique radiofréquence notamment sa capacité interne Cc, d'ajuster au mieux la valeur RLC du circuit résonant correspondant sur le module.

L'antenne peut aussi comprendre des spires ou des bornes d'interconnexion intermédiaires réalisées (notamment par déviation ou redirection des spires) à proximité de l'emplacement de la puce ou de son enrobage de résine de protection de manière à faciliter l'enrobage des fils d'interconnexion 16B, 16C. Le cas échéant, des pistes de redirection préétablies ou non avec pont isolant s'étendent des bornes d'interconnexion intermédiaires 16B, 16C vers la zone de la puce ou de son enrobage. Cependant, la construction du circuit radiofréquence sur une petite surface de module permet aussi de faciliter la connexion électrique directe notamment par fil soudé sur tout le parcours de la spirale. L'enrobage de ces fils pour protection est aussi facilité car les fils sont situés autour et à proximité de la puce.

Selon un troisième mode de réalisation, l'invention prévoit une combinaison du premier et second mode de réalisation (fig. 3A, 3B et Fig. 4).

Dans ce cas, (pour être illustré) l'antenne de la figure 3B est remplacée par l'antenne de la figure 4 avec des emplacements potentiels de bornes d'interconnexion intermédiaires 16B, 16C. (En fait, l'antenne 5 peut être la même sur les deux figures 3B et 4 puisque les bornes d'interconnexion 16B, 16C peuvent être n'importe où sur le parcours d'antenne 5 sans modification de la largeur des spires.

De cette manière, il est plus aisée d'ajuster l'accord en fréquence du circuit transpondeur radiofréquence RLC en ajustant soit la capacité (ou condensateur) 14, soit l'inductance Lb de l'antenne, soit les deux en même temps capacité Cv.

L'invention prévoit également un dispositif 1 tel qu'une carte à puce, un passeport, un boîtier électronique, un PCB de montre, téléphone, ordinateur portable comportant le module 2 selon l'un des modes décrit ci-dessus.

Le dispositif peut comporter ou non une antenne passive 20 couplée électro-magnétiquement avec l'antenne 5 ou circuit transpondeur radiofréquence RLC du module 2.

Alternativement, (non illustré) la puce peut être connectée en flip-chip (puce retournée). Des pistes de redirection 34, 38 (notamment en impression ou jet de matière) des différentes bornes d'interconnexion du module, peuvent être requises pour s'accommoder de différentes configurations spécifiques de plots de puces différentes.

Alternativement, (non illustré) pour tous les modes, le condensateur sur le module peut être formé par des surfaces conductrices (pistes, dentures conductrices de râteau) en regard les unes des autres et agencées sur un même côté du module. Par exemple, sur une face de couche isolante principale de module, on peut avoir des pistes conductrices (ou métalliques gravées), en forme d'une pluralité de premiers crans qui s'encastrent dans d'autres pistes en forme d'une pluralité de seconds crans complémentaires aux premiers crans. Il peut y avoir une couche plastique isolante laminée sur ces crans (ou une matière isolante de remplissage entre les crans) de manière à remplir l'espace d'air entre les crans en regards les uns des autres et avoir un coefficient diélectrique plus élevé que l'air pour le condensateur.

De même, le module peut comprendre une superposition de métallisations et de couches isolantes dans une direction perpendiculaire à la surface principale du module notamment de carte à puce.

Dans l'exemple, on peut superposer dans l'ordre à partir de l'extérieur du module, des premières métallisations pour les plages de contacts, une première couche isolante diélectrique, une seconde métallisation pour condensateur, une seconde couche isolante (notamment imprimée ou laminée), et une troisième métallisation pour plaque de condensateur en relation avec la seconde ou première métallisation. Des puits conducteurs traversant et/ou des pistes de redirection sont prévus sur ou à travers les différentes couches isolantes ou conductrices pour connecter les plaques à la puce.

L'invention vise de préférence dans ses applications des dispositifs radiofréquences sous forme de carte à puce dont le corps-support (ou corps de carte) a des dimensions et forme selon les standards (et/ou désignations) suivants :

- 1FF (85.6 mm x 53.98 mm x 0,76 mm) selon le standard ISO/IEC 7810:2003, ID-1
- 2FF (25 mm x 15 mm x 0,76 mm) selon le standard ISO/IEC 7810:2003.
- 3FF (15 mm x 12 mm X 0,76 mm) selon le standard ETSI TS 102 221 V9.0.0. Mini-UICC.
- 4FF (12,3 mm x 8,8 mm x 0,67 mm) selon le standard ETSI TS 102 221 V11.0.0.

Ces dispositifs radiofréquences ci-dessus comprennent un module électrique et/ou électronique incorporé ou encastré dans le corps-support. Ce module selon un des modes préférés de l'invention comprend une partie de circuit radiofréquence ajustable en fréquence de résonance. Le corps-support peut comprendre de préférence au moins une partie ou la totalité de l'antenne connectée ou couplée (antenne relais) au module. Le module à antenne peut fonctionner seul vis-à-vis d'un lecteur radiofréquence ou être couplé ou connecté à un circuit dans le corps-support ou autre support.

Le module peut être vu comme le microcircuit électrique /électronique classique porté par la couche isolante, comprenant généralement les plages de contacts ISO 7816-2 et/ou une antenne et la puce (le cas échéant ou non si déportée).

De manière générale pour tous les modes, le module (microcircuit) peut avoir format supérieur ou égal à un format d'un module classique pour carte à puce ci-dessus (par exemple environ 13 X 11 mm voire moins pour un module à 6 contacts) et inférieur ou égal à un format d'une mini carte 2FF (25 mm x 15 mm : 375 mm2). La technologie de fabrication de module type carte à puce en bobine de ruban isolant continu (Reel to Reel) (notamment en 35 mm de largeur de ruban) peut supporter ce format égal ou légèrement inférieur à 25 X 15 mm. Ces modules peuvent être ensuite surmoulés ou encartés dans une cavité de corps de carte ayant un format supérieur ou égal au format du module. Les modules type carte à puce visés par l'invention couvre donc préférentiellement des modules de carte à puce standards et/ou modules électriques et/ou électroniques pouvant être fabriqué avec la même technologie carte à puce.

Plus le facteur de forme du corps support est petit, plus le respect d'une fréquence de résonance constante est important, pour assurer des performances optimales de communication du dispositif avec un lecteur radiofréquence.

En général, la surface comprise à l'intérieur de la spire externe d'antenne d'une antenne relais (ou d'une antenne de puce radiofréquence déportée dans un corps support de module) est supérieure à la surface de la face principale d'un micromodule destiné à être encarté dans un corps support.

Donc, plus le dispositif radiofréquence avec micromodule, encastré dans une cavité de son corps-support, est petit en surface principale, plus le changement de puce est critique car il faut pouvoir ajuster la capacité et/ou l'inductance dans le module pour compenser la variation de capacité interne de la puce.

Le module dans l'invention comprend généralement un substrat diélectrique (ou couche isolante) portant la capacité en plaques ou pistes et/ou l'antenne ; la surface principale du module est inférieure à la surface principale du corps-support dans lequel il est inséré ou incorporé notamment par encartage dans une cavité du corps support.

## Revendications

**1.** Dispositif (1) de communication à puce radiofréquence, ledit dispositif comprenant

- un film-support isolant (12) d'un module électrique et/ou électronique de carte à puce (2),
- un circuit radiofréquence électrique et/ou électronique sur ledit film-support isolant, ledit circuit comprenant des plaques d'un condensateur ajustable et/ou une spirale d'antenne à inductance ajustable,
- au moins un élément (17,38) d'ajustement d'une fréquence d'accord du circuit radiofréquence, ledit élément d'ajustement (17, 38) connectant un point intermédiaire (16B) de la spirale pour diminuer l'inductance disponible et/ou scindant ou reliant les plaques pour ajuster la capacité,

**caractérisé en ce que** lesdites plaques (13A-13H) et/ou ladite spirale (5) s'étend(ent) sur ledit film-support (12).

**2.** Dispositif selon la revendication précédente, **caractérisé en ce que** le module (2) présente une face principale (12A) ayant une surface inférieure ou égale à 375 mm2.

**3.** Dispositif selon l'une des revendications précédentes, **caractérisé en ce que** ledit ajustement équivaut ou compense une variation de capacité interne (cc) de la puce supérieur à 5 μF.

**4.** Dispositif selon l'une des revendications précédentes, comprenant un corps-support (3) incorporant ou coopérant avec ledit module (2), **caractérisé en ce que** le corps-support (3) porte un élément électrique (6, 4, 5, 20) du circuit électrique et/ou électronique, ledit élément étant configuré pour connecter ou coopérer avec le module (2).

**5.** Dispositif selon la revendication précédente, **caractérisé en ce que** ledit élément électrique (6, 4, 5, 20) est choisi parmi une puce radiofréquence (6), une seconde antenne (5), une antenne relais (20), une seconde capacité (14) configurée pour connecter ou coopérer avec ledit circuit électrique.

**6.** Dispositif selon l'une quelconque des revendications précédentes, **caractérisé en ce que** le module comprend au moins deux secondes plaques conductrices (13B, 13C) sur une seconde face (12B) disposées en regard d'au moins une première plaque (13A) de manière à former ledit condensateur ajustable (14), lesdites secondes plaques (13B, 13C) étant reliées électriquement par au moins une connexion électrique (17).

**7.** Dispositif selon la revendication précédente, **caractérisé en ce que** ladite connexion électrique (17) entre lesdites deux secondes plaques (13B, 13C) est un fil soudé.

**8.** Dispositif selon la revendication 7, **caractérisé en ce que** ladite connexion électrique (17) entre lesdites deux secondes plaques (13A, 13B) est une impression conductrice ou un dépôt conducteur électrique.

**9.** Dispositif selon la revendication 7, **caractérisé en ce que** ladite connexion électrique (17) est pré-câblée par métallisation de la couche isolante et présente une marque de coupure de décourt-circuitage.

**10.** Dispositif selon l'une des revendications précédentes quand elle dépend de la revendication 6, **caractérisé en ce que** l'antenne (5) est formée sur le module, comporte plusieurs spires (11) et comprend des extrémités ou bornes terminales de connexion (15A, 16A) débouchant sur la seconde face (12B).

**11.** Dispositif selon l'une des revendications précédentes quand elle dépend de la revendication 6, **caractérisé en ce que** l'antenne (5) est formée en dehors du module (2) et **en ce que** le module comprend des plages d'interconnexion (15B, 16B) débouchant sur la seconde face (12B), lesdites plages étant configurées pour connecter des extrémités ou bornes terminales de connexion de l'antenne (15A, 16A).

12. Dispositif (1) selon la revendication précédente formant une carte à puce ou un passeport et comportant une antenne passive (20) couplée électro-magnétiquement avec l'antenne (5) du module.

13. Procédé de fabrication d'un dispositif (1) de communication à puce radiofréquence, ledit dispositif comprenant :

- un film-support isolant (12) d'un module électrique et/ou électronique de carte à puce (2),
- un circuit radiofréquence électrique et/ou électronique sur ledit film-support isolant, ledit circuit comprenant des plaques d'un condensateur ajustable et/ou une spirale d'antenne à inductance ajustable,
- au moins un élément d'ajustement d'une fréquence d'accord du circuit radiofréquence, ledit élément d'ajustement (17, 38) étant configuré de manière à connecter un point intermédiaire (16B) de la spirale pour diminuer l'inductance disponible et/ou scinder ou relier les plaques pour ajuster la capacité,

**caractérisé en ce que** lesdites plaques et/ou spirale sont/est configurée(s) de manière à s'étendre sur ledit film-support (12) isolant du module électrique et/ou électronique (2) de carte à puce.

## Patentansprüche

1. Kommunikationsvorrichtung (1) mit Funkfrequenz-Chip, wobei die Vorrichtung umfasst

- eine isolierende Trägerfolie (12) eines elektrischen und/oder elektronischen Chipkartenmoduls (2),
- einen elektrischen und/oder elektronischen Funkfrequenzschaltkreis auf der isolierenden Trägerfolie, wobei der Schaltkreis Platten eines einstellbaren Kondensators und/oder einer Antennenspirale mit einstellbarer Induktivität umfasst,
- mindestens ein Element (17, 38) zum Einstellen einer Abstimmfrequenz des Funkfrequenzschaltkreises, wobei das Einstellelement (17, 38) einen Zwischenpunkt (16B) der Spule verbindet, um die verfügbare Induktivität zu verringern und/oder die Platten teilt oder verbindet, um die Kapazität einzustellen, **dadurch gekennzeichnet, dass** sich die Platten (13A-13H) und/oder die Spirale (5) auf der Trägerfolie (12) erstreckt/erstrecken.

2. Vorrichtung nach dem vorstehendem Anspruch, **dadurch gekennzeichnet, dass** das Modul (2) eine Hauptfläche (12A) aufweist, die eine Oberfläche kleiner oder gleich 375 mm$^2$ aufweist.

3. Vorrichtung nach einem der vorstehenden Ansprüche, **dadurch gekennzeichnet, dass** die Einstellung einer Variation der internen Kapazität (cc) des Chips größer als 5 $\mu$F entspricht oder diese ausgleicht.

4. Vorrichtung nach einem der vorstehenden Ansprüche, die einen Trägerkörper (3) umfasst, in den das Modul (2) eingebaut ist oder der damit zusammenwirkt, **dadurch gekennzeichnet, dass** der Trägerkörper (3) ein elektrisches Element (6, 4, 5, 20) des elektrischen und/oder elektronischen Schaltkreises trägt, wobei das Element ausgelegt ist, um das Modul (2) zu verbinden oder mit ihm zusammenzuwirken.

5. Vorrichtung nach dem vorstehendem Anspruch, **dadurch gekennzeichnet, dass** das elektrische Element (6, 4, 5, 20) aus einem Funkfrequenz-Chip (6), einer zweiten Antenne (5), einer Relaisantenne (20), einer zweiten Kapazität (14) ausgewählt ist, die ausgelegt sind, um den Stromkreis zu verbinden oder mit ihm zusammenwirken.

6. Vorrichtung nach einem der vorstehenden Ansprüche, **dadurch gekennzeichnet, dass** das Modul mindestens zwei zweite leitende Platten (13B, 13C) auf einer zweiten Fläche (12B) umfasst, die mindestens einer ersten Platte (13A) derart zugewandt angeordnet sind, dass der einstellbare Kondensator (14) gebildet wird, wobei die zweiten Platten (13B, 13C) durch mindestens eine elektrische Verbindung (17) elektrisch verknüpft sind.

7. Vorrichtung nach dem vorstehendem Anspruch, **dadurch gekennzeichnet, dass** die elektrische Verbindung (17) zwischen den beiden zweiten Platten (13B, 13C) ein geschweißter Draht ist.

8. Vorrichtung nach Anspruch 7, **dadurch gekennzeichnet, dass** die elektrische Verbindung (17) zwischen den beiden zweiten Platten (13A, 13B) ein leitender Aufdruck oder eine elektrisch leitende Ablagerung ist.

9. Vorrichtung nach Anspruch 7, **dadurch gekennzeichnet, dass** die elektrische Verbindung (17) durch Metallisierung der Isolierschicht vorverdrahtet ist und eine Markierung einer Kurzschlussbehebungsunterbrechung aufweist.

10. Vorrichtung nach einem der vorstehenden Ansprüche, wenn er von Anspruch 6 abhängt, **dadurch ge-**

**kennzeichnet, dass** die Antenne (5) auf dem Modul ausgebildet ist, mehrere Windungen (11) umfasst und Enden oder Endklemmen (15A, 16A) umfasst, die auf der zweiten Fläche (12B) münden.

11. Vorrichtung nach einem der vorstehenden Ansprüche, wenn er von Anspruch 6 abhängt, **dadurch gekennzeichnet, dass** die Antenne (5) außerhalb des Moduls (2) ausgebildet ist und dass das Modul Zusammenschaltungsbereiche (15B, 16B) umfasst, die auf der zweiten Fläche (12B) münden, wobei die Bereiche ausgelegt sind, um Enden oder Endklemmen zur Verbindung der Antenne (15A, 16A) zu verbinden.

12. Vorrichtung (1) nach vorstehendem Anspruch, die eine Chipkarte oder einen Pass bildet und eine passive Antenne (20) umfasst, die elektromagnetisch mit der Antenne (5) des Moduls gekoppelt ist.

13. Verfahren zur Herstellung einer Kommunikationsvorrichtung (1) mit Funkfrequenz-Chip, wobei die Vorrichtung umfasst:

- eine isolierende Trägerfolie (12) eines elektrischen und/oder elektronischen Chipkartenmoduls (2),
- einen elektrischen und/oder elektronischen Funkfrequenzschaltkreis auf der isolierenden Trägerfolie, wobei der Schaltkreis Platten eines einstellbaren Kondensators und/oder einer Antennenspirale mit einstellbarer Induktivität umfasst,
- mindestens ein Element zum Einstellen einer Abstimmfrequenz des Funkfrequenzschaltkreises, wobei das Einstellelement (17, 38) derart ausgelegt ist, dass es einen Zwischenpunkt (16B) der Spirale verbindet, um die verfügbare Induktivität zu verringern und/oder um die Platten zu teilen oder zu verbinden, um die Kapazität einzustellen,

**dadurch gekennzeichnet, dass** die Platten und/oder Spule derart ausgelegt ist/sind, dass sie sich auf der isolierenden Trägerfolie (12) des elektrischen und/oder elektronischen Chipkartenmoduls (2) erstrecken.

**Claims**

1. A communication device (1) having a radio frequency chip, said device comprising

- an insulating film support (12) of an electrical and/or electronic chip module (2),
- an electrical and/or electronic radio frequency circuit on said insulating film support, said circuit comprising plates of an adjustable capacitor and/or an antenna spiral with adjustable inductance, and
- at least one adjustment element (17, 38) for adjusting a tuning frequency of the radio frequency circuit, said adjustment element (17, 38) connecting an intermediate point (16B) of the spiral to reduce the available inductance and/or splitting or connecting the plates to adjust the capacitance, **characterised in that** said plates (13A-13H) and/or said spiral (5) extend(s) over said film support (12).

2. The device according to the preceding claim, **characterised in that** the module (2) has a primary face (12A) having an area less than or equal to 375 mm2.

3. The device according to either one of the preceding claims, **characterised in that** said adjustment equals or compensates for a variation in internal capacitance (cc) of the chip of more than 5 $\mu$F

4. The device according to any one of the preceding claims, comprising a support body (3) incorporating or cooperating with said module (2), **characterised in that** the support body (3) bears an electrical element (6, 4, 5, 20) of the electrical and/or electronic circuit, said element being configured to connect or cooperate with the module (2).

5. The device according to the preceding claim, **characterised in that** said electrical element (6, 4, 5, 20) is selected from a radio frequency chip (6), a second antenna (5), a relay antenna (20) and a second capacitor (14) configured to connect or cooperate with said electrical circuit.

6. The device according to any one of the preceding claims, **characterised in that** the module comprises at least two second conductive plates (13B, 13C) on a second face (12B) arranged opposite at least one first plate (13A) so as to form said adjustable capacitor (14), said second plates (13B, 13C) being connected electrically by at least one electrical connection (17).

7. The device according to the preceding claim, **characterised in that** said electrical connection (17) between said two second plates (13B, 13C) is a bonded wire.

8. The device according to claim 7, **characterised in that** said electrical connection (17) between said two second plates (13A, 13B) is a conductive pattern or an electrically conductive deposit.

9. The device according to claim 7, **characterised in that** said electrical connection (17) is pre-wired by metallization of the insulating layer and has a break mark to prevent short circuits.

10. The device according to any one of the preceding claims when dependent on claim 6, **characterised in that** the antenna (5) is formed on the module, comprises a number of turns (11) and has connection ends or terminals (15A, 16A) emerging on the second face (12B).

11. The device according to any one of the preceding claims when dependent on claim 6, **characterised in that** the antenna (5) is formed outside the module (2), and **in that** the module comprises interconnection pads (15B, 16B) emerging on the second face (12B), said pads being configured to connect connection ends or terminals (15A, 16A) of the antenna.

12. The device (1) according to the preceding claim, forming a chip card or a passport and comprising a passive antenna (20) coupled electromagnetically to the module antenna (5).

13. A method for producing a communication device (1) having a radio frequency chip, said device comprising:

    - an insulating film support (12) of an electrical and/or electronic chip module (2),
    - an electrical and/or electronic radio frequency circuit on said insulating film support, said circuit comprising plates of an adjustable capacitor and/or an antenna spiral with adjustable inductance,
    - at least one adjustment element for adjusting a tuning frequency of the radio frequency circuit, said adjustment element (17, 38) being configured so as to connect an intermediate point (16B) of the spiral to reduce the available inductance and/or to split or connect the plates to adjust the capacitance,

    **characterised in that** said plates and/or spiral are/is configured so as to extend over said insulating film support (12) of the electrical and/or electronic chip card module (2).

1

2

4

20

3

3A

22

# Fig. 1

(20,4)

2

6

| BOOSTER |
|---|
| R1 |
| L1=20    Cb=4    L2 |

| MODULE |
|---|
| CHIP |
| Lb=5    Cv=14    Cc |
| R2 |

# Fig. 2

Fig. 3B

Fig. 3A

Fig. 4

Fig. 5

EP 3 391 291 B1

**EP 3 391 291 B1**

## RÉFÉRENCES CITÉES DANS LA DESCRIPTION

**Documents brevets cités dans la description**

- EP 1242970 A
- EP 0992366 A1
- US 2015097040 A1
- WO 2005104022 A1
- FR 2743649